# EUROPÄISCHE PATENTSCHRIFT

(11) **EP 3 281 266 B1**
(45) Veröffentlichungstag und Bekanntmachung des Hinweises auf die Patenterteilung: **03.05.2023**
(21) Anmeldenummer: 16710749.9
(22) Anmeldetag: 18.03.2016
(51) Int. Cl.: H02H 3/087, H02H 1/04, H02H 9/00

(54) **VERFAHREN UND VORRICHTUNG ZUR ENERGIEVERSORGUNG EINER NIEDERSPANNUNGSLAST**
METHOD AND DEVICE FOR SUPPLYING ENERGY TO A LOW-VOLTAGE LOAD
PROCÉDÉ ET DISPOSITIF POUR L'ALIMENTATION EN ÉNERGIE D'UNE CHARGE À BASSE TENSION

(30) Priorität: 10.04.2015 DE 102015105476
(43) Veröffentlichungstag der Anmeldung: 14.02.2018
(73) Patentinhaber: ABB Schweiz AG, 5400 Baden (CH)
(72) Erfinder: ZOWISLOK, Florian, 77960 Seelbach (DE); LILL, Dirk, 79100 Freiburg im Breisgau (DE)
(74) Vertreter: Maiwald GmbH
(86) Internationale Anmeldenummer: PCT/EP2016/055987
(87) Internationale Veröffentlichungsnummer: WO 2016/162186

(56) Entgegenhaltungen:
- EP-A2- 0 302 470
- WO-A1-2015/082207
- DE-A1-102005 031 833

## Beschreibung

Die Erfindung betrifft ein Verfahren zur Energieversorgung einer Niederspannungslast mit Hilfe einer elektronischen Stromversorgungsvorrichtung.

Die Erfindung betrifft weiterhin eine elektronische Stromversorgungsvorrichtung zur Energieversorgung einer Niederspannungslast durch Bereitstellen einer Ausgangsgleichspannung und eines Ausgangsstromes bis zur Höhe eines Stromspitzenwertes.

In industriellen Anlagen werden Niederspannungsverbraucher, wie z.B. Steuerungen, Verstärker und dergleichen mit einer für den Menschen ungefährlichen Gleichspannung von vorzugsweise 24 Volt versorgt. Geeignete Stromversorgungseinrichtungen, die eine solche Gleichspannung bereitstellen, können Ausgangsströme von 20 A und mehr liefern. Bei derart hohen Strömen müssen Sicherungseinrichtungen, wie z.B. Schmelzsicherungen oder Leitungsschutzschalter, in Reihe mit den jeweiligen Verbrauchern geschaltet werden, um diese und insbesondere die Zuleitungen gegen thermische Überlastung und Kurzschlussströme zu sichern. Um Lei-tungsschutzschalter bei Auftritt eines elektrischen Störfalls, beispielsweise eines Kurzschlusses, sicher magnetisch auslösen zu können, sind Auslöseströme erforderlich, die etwa das 7,5-fache des hinsichtlich der Stromversorgungseinrichtung angegebenen Nennstroms betragen. Das Auslöseverhalten von Leitungsschutzschaltern ergibt sich aus deren Zeit-Strom-Auslösekennlinie, wie zum Beispiel der B-Charakteristik. Klassische 50 Hz-Transformator, die als Stromversorgungseinrichtungen verwendet werden, können bei üblicher Dimensionierung in einem Kurzschlussfall derart hohe Auslöseströme für Leitungsschutzschalter liefern. Aufgrund hoher elektrischer Verluste und des großen Gewichtes werden derartige 50 Hz-Transformatoren in der Industriestromversorgung immer häufiger durch elektronische Stromversorgungseinrichtungen, wie z.B. mit hoher Frequenz getakteter Schaltnetzteile ersetzt. Elektronische Stromversorgungseinrichtungen begrenzen jedoch üblicherweise den Ausgangsstrom bei Auftritt einer elektrischen Störung sehr schnell, das heißt zwischen 10 und 100 µsec, auf den 1,1- bis 1,5-fachen Wert des Nenn-stroms, um Verbraucher und Zuleitungen gegen thermische Überlastungen und Kurzschlussströme zu schützen. Damit ist ein sicheres Auslösen einer elektromagnetischen Schutzeinrichtung nicht immer gewährleistet.

Ein ausgangsseitiger erhöhter Energiebedarf tritt nicht nur bei einer Störung, wie dem erwähnten Kurzschluss, auf. Auch das Zuschalten von Lasten, beispielsweise der Anlauf eines Elektromotors, kann einen kurzfristig erhöhten Energiebedarf an der Ausgangsseite der Stromversorgungseinrichtung zur Folge haben. In diesem Fall würde man allgemein von einer Sonderbedingung mit erhöhtem Energiebedarf sprechen. Ein Störfall wie der erwähnte Kurzschluss ist eine extreme Ausprägung einer solchen Sonderbedingung.

Beim Zuschalten einer großen kapazitiven Last bricht die Ausgangsspannung schnell ein, und sie steigt als Funktion des Schleifenwiderstandes und der Kapazität wieder an. Beim Zuschalten einer induktiv-ohmschen Last, etwa eines Motors, fließt ein hoher Anlaufstrom, der nur durch den ohmschen Widerstand der Motorwicklung begrenzt wird. Üblicherweise wird innerhalb weniger Sekunden der Normalbetrieb wieder erreicht. In der Übergangszeit kann die Last von der Stromversorgungseinrichtung allerdings Ausgangsströme ziehen, die weit über dem 1,5-fachen Wert, aber unterhalb des für das Auslösen der Sicherungseinrichtung erforderlichen 6- bis 7,5-fachen Wert des Nennstroms liegen, und das für eine variable, lastabhängige und nicht vorherbestimmbare Zeitdauer.

Aus der DE 10 2005 031 833 A1 ist ein Verfahren zur Energieversorgung einer durch eine Schutzeinrichtung gesicherten Niederspannungslast mit Hilfe einer elektronischen Stromversorungsvorrichtung, eines Schaltnetzteils, bekannt, nach dem die Eingangs- und/oder Ausgangsspannung der Stromversorgungseinrichtung überwacht wird, um einen Abfall der Eingangs- und/oder Ausgangsspannung unter einen Schwellwert zu erfassen. Beim Erfassen eines Abfalls der Ein- und/oder Aus-gangsspannung unter den Schwellwert wird ein Strom für eine vorbestimmte Zeit bereitgestellt, dessen Größe derart bemessen wird, dass die Schutzeinrichtung sicher ausgelöst wird, und nach Ablauf der vorbestimmten Zeit wird der Strom auf einen niedrigeren Wert begrenzt. Im Stand der Technik wird ein Abfall der Ein- oder Ausgangsspannung unter einen Schwellwert als Indiz für einen Störfall oder einer Sondersituation interpretiert, und in Reaktion darauf ein erhöhter Ausgangsstrom bereitgestellt, der immer so hoch ist, dass eine Schutzeinrichtung sicher ausgelöst werden kann.

Damit ist ein an die spezifische Art eines Störfalls oder einer Sonderbedingung angepasstes Reagieren der Stromversorgungsvorrichtung nicht möglich. Der Stand der Technik unterscheidet nicht, ob die Sonderbedingung beispielsweise ein Kurzschluss oder ein Motoranlauf ist.

Die WO 2015082207 A1 zeigt eine Stromversorgungseinrichtung zum Umwandeln einer Eingangsspannung in eine Ausgangsspannung, aufweisend zumindest eine von einer Pulsweitenmodulationsschaltung getaktet angesteuerten Schaltstufe, wobei eine Regelschaltung vorgesehen ist, die auf die Pulsweitenmodulationsschaltung zur Änderung der Höhe der Ausgangsspannung einwirkt, wobei eine Strombegrenzungsschaltung vorgesehen ist, die einen Ausgangsstrom der Stromversorgungseinrichtung nach Überschreiten eines Schwellenwertes zunächst für einen Zeitraum auf einen erhöhten Maximalstrom begrenzt und danach auf einen regulären Maximalstrom begrenzt, wobei die Regelschaltung so eingerichtet ist, dass der Zeitraum, für den der Ausgangsstrom auf den erhöhten Maximalstrom begrenzt ist, von der Höhe des Ausqanqsstroms abhängig ist, sowie ein entsprechendes Verfahren.

Es ist daher die der vorliegenden Erfindung zugrundeliegende Aufgabe, ein Verfahren zur Energieversorgung einer Niederspannungslast mit Hilfe einer elektronischen Stromversorgung zu schaffen, das in Reaktion auf das Auftreten einer Sonderbedingung im nachgeordneten Stromkreis einen erhöhten Ausgangsstrom schnell und angepasst an die aus der Art der Sonderbedingung sich ergebenden Erfordernisse bereitstellt.

Es ist eine weitere Aufgabe der vorliegenden Erfindung, eine elektronische Stromversorgungsvorrichtung zur Energieversorgung einer Niederspannungslast durch Bereitstellen einer Ausgangsgleichspannung und eines Ausgangsstromes zu schaffen, mit der das erfindungsgemäße Verfahren durchgeführt werden kann.

Die Aufgabe wird bezüglich des Verfahrens gelöst durch ein Verfahren nach Anspruch 1.

Bezüglich der elektronischen Stromversorgungsvorrichtung wird die Aufgabe gelöst durch eine elektronische Stromversorgungsvorrichtung nach Anspruch 5.

Der vorbestimmte Stromspitzenwert entspricht der Spitzenbelastbarkeit der Stromversorgungsvorrichtung. Bei einem schaltnetzteil ist das beispielsweise der 6-fache Nennstrom. Ein 10A-Netzteil zum Beispiel hat dann eine Spitzenbelastbarkeit von 60A.

Erfindungsgemäß also kann die Stromversorgungsvorrichtung von Anfang an bei Bedarf einen Ausgangsstrom liefern der dem Stromspitzenwert entspricht. Es gibt keine anfängliche Strombegrenzung auf den 1,5 - fachen Nennstrom, wie es bei Schaltnetzteilen im Stand der Technik vorgesehen und bekannt ist. Der Vorteil liegt darin, dass bei Auftreten einer Sondersituation, beispielsweise des Anlaufens eines Motors, wenn die Last einen Ausgangsstrom des Schaltnetzteiles benötigt, der größer als der 1,5-fache Nennstrom ist, also beispielsweise 30A, dieser erhöhte Strom unmittelbar und verzögerungsfrei zur Verfügung gestellt wird.

Durch das erfindungsgemäße Merkmal b) wird eine Sondersituation erkannt, indem der Ausgangsstrom gemessen wird. Der Schwellwert liegt beispielsweise bei einem Ausgangsstrom vom 1,5 - fachen des Nennwertes, bei einem 10A-netzteil beispielsweise bei 15A. wenn also die angeschlossene Last einen Strom von mehr als 15A "zieht", heißt das, dass eine Sondersituation, beispielsweise ein Motoranlauf oder ein Kurzschluss im angeschlossenen Stromkreis vorliegt. Die Erkennung der Sondersituation anhand des Stromverlaufs hat den Vorteil, dass auch Sondersituationen erfasst werden, bei denen die Ausgangsspannung anfänglich nicht absinkt, wie es beispielsweise bei einer induktiven oder resistiven Last, wie bei dem Motoranlauf, der Fall ist. Außerdem wird eine Sondersituation über die Messung des Ausgangsstromes schneller erfasst als mit Messung der Ausgangsspannung, denn der Stromanstieg erfolgt zeitlich vor dem Absinken der Ausgangsspannung.

Die Merkmale c) und d) sorgen dafür, dass der Ausgangsstrom in der Höhe, wie er von der Last in der Sondersituation gerade benötigt wird, bereitgestellt ist, und zwar für eine Impulsdauer, die an die Höhe des geforderten Ausgangsstromes angepasst ist. Das ist in vorteilhafter Weise eine lastbezogene Strombereitstellung.

In einer vorteilhaften Weiterbildung ist die Ausgangsstrompulsdauer dabei umso länger, je niedriger der erhöhte Ausgangsstromwert ist.

Um eine Überlastung des Netzteiles zu vermeiden, wird erst nach Ablauf der lastbezogen ermittelten Impulsdauer der Ausgangsstrom auf den Schwellwert, also beispielsweise den 1,5-fachen Nennstrom, begrenzt.

Erfindungsgemäß erfolgt das Bereitstellen des Ausgangsstromes in Höhe des Schwellwertes nach Ablauf der Ausgangsstrompulsdauer für die Dauer einer vorbestimmten Erholungszeit, und nach Ablauf der Erholungszeit wird die Stromversorgungsvorrichtung wieder darauf eingestellt, um bei Bedarf einen Ausgangsstrom bis zu dem vorbestimmten Stromspitzenwert an die Niederspannungslast bereitstellen zu können. Damit verbunden ist der Vorteil, dass die Komponenten des Netzteiles sich während der Erholungszeit abkühlen können, und falls die Sondersituation nach Ende der Erholungszeit noch nicht abgeklungen sein sollte, der erhöhte Ausgangsstrom erneut für die Dauer einer Ausgangsstrompulsdauer zur Verfügung gestellt wird, und so weiter, bis die Sondersituation behoben ist. Das beheben der Sondersituation kann beispielsweise im Falle des Motoranlaufs darin bestehen, dass der Motor seinen Nenndrehzahl erreicht hat, oder im Falle eines Kurzschlusses darin, dass die Sicherungseinrichtung angesprochen hat und der entsprechende Stromkreis abgeschaltet wurde.

Erfindungsgemäß wird die Erholungszeit in Abhängigkeit von dem erhöhten Ausgangsstromwert ermittelt. Damit verbunden ist der Vorteil, dass die Erholungszeit an die Last während der Sonderbedingung angepasst ist und das Verfahren damit sehr flexibel auf die jeweils tatsächlich vorliegenden Lastbedingungen reagieren kann. Im Falle eines Kurzschlusses beispielsweise mit dem maximal möglichen Ausgangsstrom muss die Erholungszeit länger sein als bei einem Motoranlauf mit geringfügig erhöhtem Strombedarf von beispielsweise dem 2-fachen Nennstrom. Hier kann die Erholungszeit kürzer sein, so dass insgesamt die Zeitdauer der Sonderbedingung verkürzt wird.

Wenn gemäß einer vorteilhaften Ausführungsform der Erfindung eine Schutzeinrichtung zur Sicherung der Niederspannungslast vorhanden ist, beispielsweise ein Leitungsschutzschalter mit einem elektromagnetischen Kurzschlussstromauslöser, dann wird der Stromspitzenwert so hoch bestimmt, dass die Schutzeinrichtung sicher ausgelöst wird, und zwar bevorzugt innerhalb einer Zeit, die kleiner ist als die Ausgangsstrompulsdauer.

In einer vorteilhaften Weiterbildung der Erfindung wird, wenn der Ausgangsstrom vor Ablauf der Ausgangsstrompulsdauer den Schwellwert erreicht oder unterschreitet, die Stromversorgungsvorrichtung darauf eingestellt, um einen Ausgangsstrom bis zur Höhe des Schwellwertes bereitstellen zu können. Das bedeutet, dass nach dem Unterschreiten des Schwellwertes, also beispielsweise des 1,5-fachen Nennwertes des Ausgangsstromes, der aktuelle Strompuls abgebrochen wird, denn dann ist die Sondersituation offensichtlich beendet und es besteht keine Veranlassung, den erhöhten Stromwert bis zum Ende der Ausgangsstrompulsdauer weiter zur Verfügung zu stellen. Durch diese Maßnahme wird verhindert, dass es im Falle dass ein System mehrerer parallel geschalteter Stromversorgungen vorhanden ist, es zum Schwingen dieses Systems kommen kann.

Eine erfindungsgemäße elektronische Stromversorgungsvorrichtung ist in einer vorteilhaften Ausgestaltung ein elektronisches Schaltnetzteil, und die Einrichtung hat einen Gleichspannungswandler mit einstellbarem Energieübertragungsverhältnis und eine Strommesseinrichtung zur Überwachung des Ausgangsstromes und eine Einstelleinrichtung zur Einstellung des Energieübertragungsverhältnisses in Abhängigkeit von dem erfassten Ausgangsstrom. Der Gleichspannungswandler ist dabei in einer vorteilhaften Ausführungsform ein Halbbrücken-LLC-Resonanzwandler.

In vorteilhafter Ausführungsform der Erfindung beeinflusst die Einstelleinrichtung zur Einstellung des Energieübertragungsverhältnisses die Arbeitsfrequenz des Halbbrücken-LLC-Resonanzwandlers.

Die Erfindung wird nachfolgend anhand eines Ausführungsbeispiels in Verbindung mit den beiliegenden Zeichnungen näher erläutert.

Es zeigen
- Fig. 1: schematisch eine Vorrichtung zur Energieversorgung einer Niederspannungslast gemäß der Erfindung,
- Fig. 2: schematisch eine weitere Ausführungsform einer Energieversorgungeiner Niederspannungslast gemäß der Erfindung,
- Fig. 3: ein Ablaufschema des erfindungsgemäßen Verfahrens zur Energieversorgung einer Niederspannungslast gemäß der Erfindung,
- Fig. 4: eine schematische Darstellung verschiedener Überlastkurven bei einem erfindungsgemäßen Schaltnetzteil;
- Fig. 5: eine schematische Darstellung verschiedener Ausgangsstrompulse gemäß dem erfindungsgemäßen Verfahren bei verschiedenen Lastbedingungen,
- Fig. 6: eine Darstellung der Ausgangsstrompulsdauer in Abhängigkeit von dem erhöhten Stromwert gemäß einer Ausführungsform des erfindungsgemäßen Verfahrens,
- Fig. 7: eine Darstellung der Strompulse im Ausgangs-Spannungs/AusgangsStrom - Diagramm gemäß dem erfindungsgemäßen Verfahren bei verschiedenen Lastbedingungen
- Fig. 8: das Verhältnis von Ausgangsstrom-Pulsdauer und Erholungszeit innerhalb der ersten Sekunde gemäß einer Ausführungsform des erfindungsgemäßen Verfahrens.

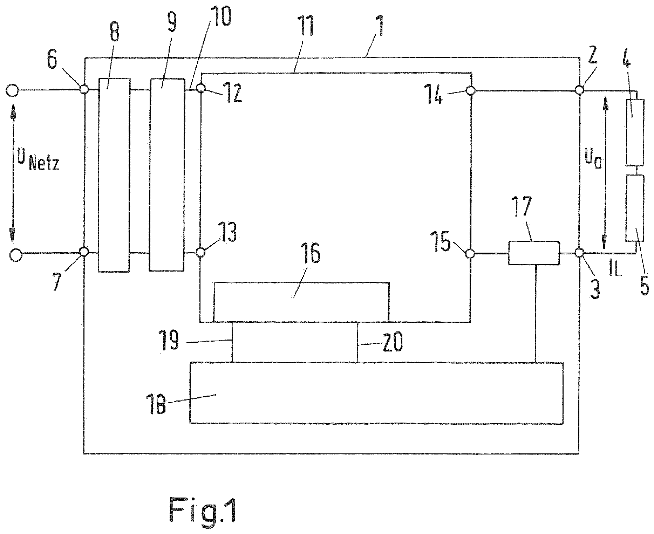

Die Figur 1 zeigt beispielhaft ein Energieversorgungssystem mit einer elektronischen Stromversorgungsvorrichtung 1, an deren Ausgangsklemmen 2, 3 eine Niederspannungslast 4, die symbolisch durch einen Widerstand dargestellt ist, angeschaltet ist. In reihe mit der Niederspannungslast 4 ist eine Schutzeinrichtung 5 geschaltet, im hier vorliegenden Beispiel ein elektromagnetischer Leitungsschutzschalter.

Die elektronische Stromversorgungseinrichtung 1 stellt an ihren Ausgangsklemmen 2, 3 beispielsweise eine Gleichspannung U_{A} von 24V im Nennbetrieb und einen Ausgangsgleichstrom I_{L} bereit. Obwohl in Figur 1 nur eine Niederspannungslast 4 an die elektronische Stromversorgungseinrichtung 1 angeschlossen ist, können natürlich mehrere Lasten, vorzugsweise parallel, an die elektronische Stromversorgungseinrichtung 1 angeschlossen werden. Jeder Last kann dann ein eigener Leitungsschutzschalter zugeordnet sein.

Bei der elektronischen Stromversorgungseinrichtung 1 kann es sich um ein Schaltnetzteil handeln, das an zwei Eingangsklemmen 6, 7 über eine Netzspannung U_{Netz} versorgt wird. Die Stromversorgungseinrichtung 1 enthält eine den Eingangsklemmen 6, 7 zugeordnete Gleichrichterschaltung 8 und eine Leistungsfaktorkorrekturfilter-Schaltung 9, auch bekannt als PFC oder Power Factor Conditioning-Schaltung. Über einen internen HV-DC-Bus wird die gleichgerichtete Eingangsspannung den Eingangsklemmen 12, 13 eines Gleichspannungswandlers 11, auch als DC/DC-Wandler bekannt, zugeführt. Der DC/DC-Wandler 11 wandelt die hohe Eingangsspannung, die beispielsweise 300V DC beträgt, in die geforderte niedrigere Ausgangsspannung von 24V DC, und der DC/DC-Wandler 11 stellt den an den Ausgangsklemmen 2, 3 geforderten Ausgangsgleichstrom IL bereit.

Im vorliegenden Beispiel wird als DC/DC-Wandler 11 ein Halbbrücken-LLC-Resonanzwandler verwendet. Das Arbeitsprinzip, die physikalischen Eigenschaften und die Funktionsweise eines Halbbrücken-LLC-Resonanzwandlers ist bekannt, beispielsweise aus Bob Yang, Fred C. Lee, Alpha J. Zhang, Guisong Huang, LLC resonant Converter for Front End DC/DC Conversion, veröffentlicht im Internet unter http://www.cpes.vt.edu/_media/annual_reports/2002/Report/VolumeIIPartII/1DPS/4.p df. Der DC/DC-Wandler beinhaltet eine Wandler-Stelleinrichtung 16, mittels derer dem Wandler 11 Stellwerte für den maximal von ihm an dessen Wandlerausgangsklemmen 14, 15 zur Verfügung gestellten Gleichstrom I_{L} übermittelt werden. Damit ist gewissermaßen das Energieübertragungsverhältnis des Gleichspannungswandlers zwischen seinen Eingangsklemmen 12, 13 und seinen Ausgangsklemmen 14, 15 einstellbar.

Die Stromversorgungseinrichtung 1 beinhaltet eine Strommesseinrichtung 17, die den von dem DC/DC-Wandler bereitgestellten Ausgangsgleichstrom I_{L} erfasst. Die Strommesseinrichtung 17 kann ein im Prinzip bekannter Stromsensor sein, zum Beispiel ein Messwiderstand, über dem der Spannungsabfall gemessen wird, welcher proportional zu dem durch den Messwiderstand fließenden Strom ist, oder ein induktiv arbeitender Stromsensor oder ein Hall-Sensor etc. Dieser Wert wird einer Steuerlogik 18 zur Verfügung gestellt. Die Steuerlogik 18 ermittelt aus dem erfassten Ausgangsstrom I_{L}, aus dessen Höhe und dessen zeitlichem Verlauf, zwei Stellgrößen für die Wandler-Stelleinrichtung 16. Eine erste Stellgröße bewirkt, dass der von dem DC/DC-Wandler bereitgestellte Strom auf einen Schwellwert I_{N}, der beispielsweise dem 1,5-fachen Nennstrom von hier im Beispiel 1,5 x 10A = 15A entspricht, begrenzt ist. Eine zweite Stellgröße 20 bewirkt, dass der von dem DC/DC-Wandler bereitgestellt Strom auf einen Stromspitzenwert begrenzt ist, der der maximalen thermischen Spitzenbelastbarkeit der Bauelemente entspricht, hier im Beispiel ein Wert in Höhe des sechsfachen Nennstroms, also 60A.

Die zweite Stellgröße bewirkt also, dass eine an den Ausgangsklemmen 2, 3 der Stromversorgungseinrichtung angeschlossene Last in Abhängigkeit von ihrer Größe einen Strom bis zur Grenze von 60A "ziehen" kann. Wenn die Last 4 in einem ersten Lastzustand beispielsweise 1,6 Ohm beträgt, so würde bei einer Ausgangsspannung von 24V das Schaltnetzteil 1 einen Ausgangsstrom I_{L} von 15A bereitstellen, wenn die zweite Stellgröße der Wandler-Stellleinrichtung 16 zugeführt ist. Sinkt der Lastwiderstand 4 auf beispielsweise 1,2 Ohm, so erhöht sich der bereitgestellt Ausgangsstrom I_{L} auf 20A. Sinkt der Lastwiderstand 4 weiter auf beispielsweise 0,8 Ohm, so steigt der bereitgestellte Strom auf 30A. Bei einem angenommenen weiteren Absinken des Lastwiderstandes auf 0,4 Ohm würde der bereitgestellte Ausgangsstrom sogar auf 60A ansteigen können. Ein so niedriger Lastwiderstand von 0,4 Ohm oder weniger kann beispielsweise bei einem beginnenden Kurzschluss in dem Lastkreis auftreten. Die Ausgangsspannung U_{A} ist dann noch auf ihrem Nennwert von 24V, doch das erfindungsgemäße Schaltnetzteil 1 stellt ohne Verzögerung einen Ausgangsstrom von 60A zur Verfügung, der ausreichen kann, um die Schutzeinrichtung 5 auszulösen und den Kurzschluss damit abzuschalten.

Die Steuerlogik 18 ist jedoch so eingerichtet, dass der erhöhte Ausgangsstrom I_{L} , wenn er den Schwellwert IN überschreitet, nicht unbegrenzt lange bereitgestellt werden kann, sondern nur für eine kürzere Zeitdauer, die hier sogenannte Ausgangsstrompulsdauer tₚᵤₗₛₑ. Die Ausgangsstrompulsdauer wird in Abhängigkeit von der betragsmäßigen Höhe des Ausgangsstromes I_{L} in der Steuerlogik 18 ermittelt. Sie ist umso kürzer, je größer der von der Last 4 geforderte Ausgangsstrom I_{L} ist. Wenn die Ausgangsstrompulsdauer erreicht ist, stellt die Steuerlogik 18 der Wandler-Stelleinrichtung 16 statt der zweiten Stellgröße 20 die erste Stellgröße 19 zur Verfügung, welche dann bewirkt, dass der DC/DC-Wandler nur einen Ausgangsstrom in Höhe des Schwellwertes von hier im Beispiel dem 1,5-fachen Nennstrom bereitstellt.

Die Steuerlogik kann als elektronische Hardwareschaltung aufgebaut sein. Sie kann auch in Software realisiert sein; dann umfasst die Steuerlogik einen Mikroprozessor mit einem entsprechend eingerichteten Anwendungsprogramm.

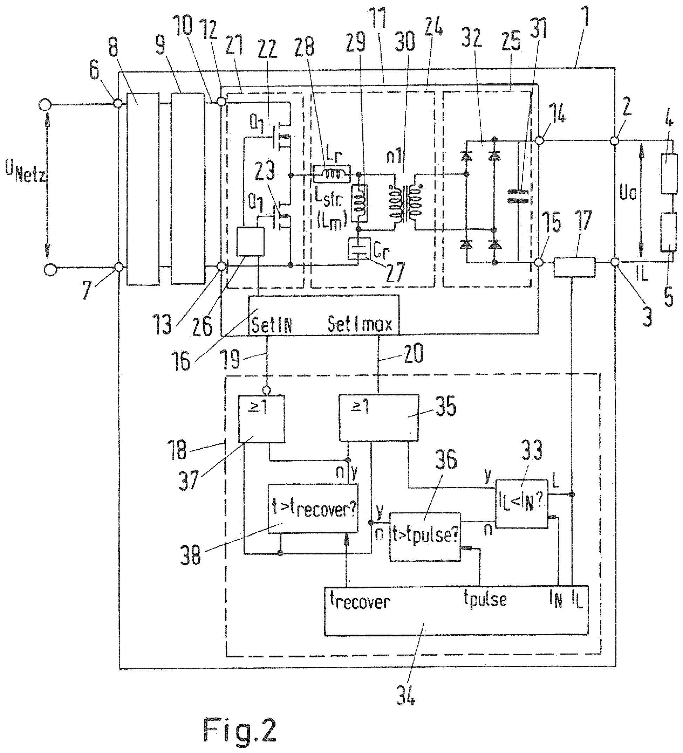

Es werde nun die Figur 2 betrachtet. Hier ist schematisch die Topologie des als LLC-Resonanzwandler ausgeführten Gleichspannungswandlers 11 gezeigt. Die Topologie des LLC-Resonanzwandlers hat drei Stufen: einen Rechteckwellengenerator 21, ein Resonanznetzwerk 24 und ein Gleichrichternetzwerk 25.

Der Rechteckwellengenerator 21 erzeugt eine Rechteckspannung, indem eine Steuerschaltung 26 zwei hier als MOSFETs realisierte Schalter 22 und 23 abwechselnd mit einem Tastverhältnis von 50% ansteuert. Der Rechteckwellengenerator 21 kann als Halbbrücke, wie hier gezeigt, oder als Vollbrücke ausgebildet sein.

Das Resonanznetzwerk 24 ist mit einer Kapazität 27, einer Serien-Streuinduktivität 28 und der Magnetisierungsinduktivität 29 eines Hochfrequenztransformators 30 ausgebildet. Der Q-Faktor des Resonanznetzwerkes wird von diesen drei Komponenten und der externen Last 4 beeinflusst. Je kleiner der ohmsche Anteil der externen Last, und je größer deshalb der bei konstanter Ausgangsspannung von der Last angeforderte Ausgangsstrom, desto größer ist der Q-Faktor. Bei einem Kurzschluss im externen Lastkreis ist der Widerstand sehr klein, entsprechend ist der angeforderte Ausgangsstrom und der Q-Faktor des Resonanzkreises 24 hoch. Ebenso ist bei einem Schwerlastanlauf eines Elektromotors der angeforderte Ausgangsstrom und der Q-Faktor hoch. Der LLC-Resonanzkreis 24 wird in der hier beschriebenen Anwendung im Bereich des Zero Voltage Switching ZVS betrieben, das heißt, das Umschalten der MOSFETs erfolgt im Nulldurchgang der Spannung. Die Wandler-Stelleinrichtung sorgt dafür, dass der prinzipiell ebenfalls mögliche Betrieb im Bereich des Zero Current Switching ZCS, also Schalten im Nulldurchgang des Stromes, vermieden wird. Der LLC-Resonanzkreis hat zwei Resonanzfrequenzen, eine erste und eine zweite Resonanzfrequenz. Die zweite Resonanzfrequenz ist kleiner als die erste Resonanzfrequenz. Der Rechteckwellengenerator wird so gesteuert, dass die Arbeitsfrequenz in der Nähe der ersten Resonanzfrequenz gehalten wird. Hier ist die Verstärkung des LLC-Resonanzkreises nahezu unabhängig von der äußeren Last, ein Vorteil der LLC-Topologie. Durch Veränderung der Arbeitsfrequenz weg von der ersten Resonanzfrequenz kann die Verstärkung des LLC-Resonanzkreises und damit die übertragene Energie beziehungsweise der am Ausgang bereitstellbare Ausgangsstrom beeinflusst werden. Die Wandler-Stelleinrichtung 16 beeinflusst mittels der Stellgrößen 19 und 20 daher die von der Steuerschaltung 26 des Rechteckwellengenerators 21 vorgegebene Arbeitsfrequenz des LLC-Resonanzkreises. Die Arbeitsfrequenz des LLC-Resonanzkreises legt damit die maximale Höhe des Ausgangsstromes bei einer gegebenen Ausgangsgleichspannung U_{A} fest. Vereinfacht ausgedrückt erfolgt die Einstellung des Energieübertragungsverhältnisses und damit die Einstellung des von dem DC/DC-Wandler an seinen Ausgangsklemmen maximal abrufbaren Geleichstromes I_{L} über die Einstellung der Schwingkreis-Frequenz des LLC-Resonanzwandlers.

Das Gleichrichternetzwerk 25 richtet die am Ausgang des HF-Transformators anstehende Wechselspannung wieder gleich. Sie ist hier als Vollbrückengleichrichter 32 mit Glättungskondensator 31 ausgeführt.

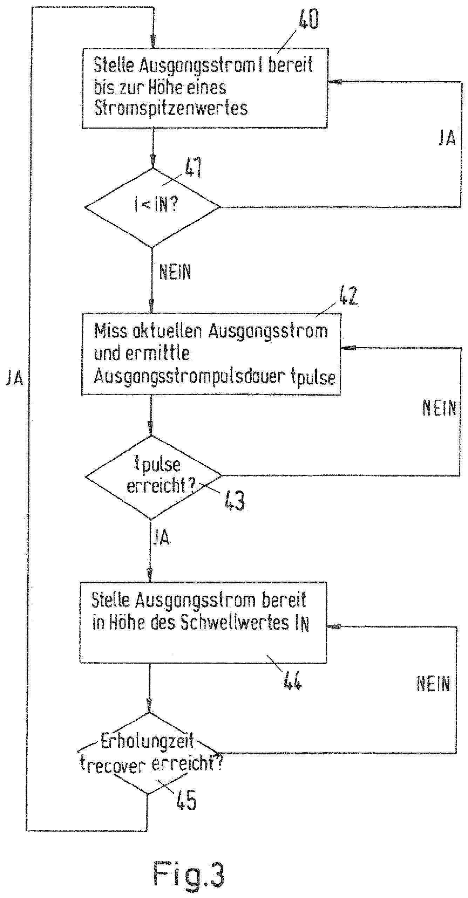

Es werde nun die Figur 3 betrachtet. Hier wird das erfindungsgemäße Verfahren zur Energieversorgung einer Niederspannungslast 4 mit Hilfe einer elektronischen Stromversorgungsvorrichtung 1 erläutert, wie es mit der elektronischen Stromversorgungsvorrichtung 1 gemäß den Figuren 1 und 2 durchgeführt werden kann. Bei der Beschreibung des erfindungsgemäßen Verfahrens nach Figur 3 wird auch Bezug genommen auf eine exemplarische Implementierung dieser Verfahrensschritte in der Steuerlogik 18. Dazu ist in der Figur 2 innerhalb der Steuerlogik 18 lediglich beispielhaft und schematisch eine mögliche Anordnung und Verknüpfung von Funktionsbausteinen, teils Zähler, teils logische Gatter, teils komplexere Kontrollschaltungsglieder, dargestellt. Die tatsächliche Realisierung des erfindungsgemäßen Verfahrens in einer elektronischen Schaltung oder mithilfe einer Anwendungssoftware für einen Mikroprozessor kann auch davon abweichende, anders aufgebaute und/oder anders zusammengestellte Funktionsbausteine oder Programmmodule umfassen und enthalten.

In einem ersten Schritt 40 wird die Stromversorgungseinrichtung 1 darauf eingestellt, um bei Bedarf einen Ausgangsstrom bis zu einem vorbestimmten Stromspitzenwert an die Niederspannungslast 4 bereitstellen zu können. Der Stromspitzenwert ist im oben beschriebenen Beispiel der sechsfache Nennstrom, bei einem 10A - Netzteil sind das 60A. Die Ausgangsspannung Uₐ beträgt 24V, und je nach der Größe der Last 4 zieht diese den erforderlichen Strom, welcher geringer als der Nennstrom sein kann, aber auch größer. Das Netzteil stellt einen Strom zur Verfügung, der nur durch die eigene Spitzenbelastbarkeit begrenzt wird. Der resultierende kurzzeitige Stromspitzenwert entspricht dem sechsfachen Nennstrom. Der resultierende kurzzeitige Stromspitzenwert kann dabei so hoch sein, dass die Schutzeinrichtung 5, hier im Beispiel ein elektromagnetischer Kurzschlussstromauslöser, sicher ausgelöst wird.

Der von der elektronischen Stromversorgungseinrichtung an die Niederspannungslast 4 bereitgestellte Ausgangsstrom I_{L} wird überwacht, um ein Ansteigen des Ausgangsstroms I_{L} über einen Schwellwert I_{N}, der niedriger ist als der Stromspitzenwert, zu erkennen. Dauerhaft kann das Netzteil abhängig von der Umgebungstemperatur und der Einbaulage den 1,5 - fachen Nennstrom liefern zur Unterstützung länger anhaltender Überlastphasen. Der Schwellwert I_{N} wird daher auf den 1,5 - fachen Nennstrom eingestellt. Der Ausgangsstrom IL wird mit der Strommesseinrichtung 17 erfasst, der Messwert wird in einem ersten Vergleichsschritt 41 mit dem Schwellwert I_{N} verglichen. Ist der Ausgangsstrom I_{L} kleiner als der Schwellwert I_{N}, so wird weiter gemessen und verglichen und die elektronische Stromversorgungseinrichtung bleibt darauf eingestellt, um bei Bedarf einen Ausgangsstrom bis zu dem vorbestimmten Stromspitzenwert an die Niederspannungslast 4 bereitstellen zu können, so lange, bis der Ausgangsstrom I_{L} gleich oder größer als der Schwellwert I_{N} wird.

In der Figur 2 sind dazu schematisch und lediglich beispielhaft mögliche Funktionsblöcke innerhalb der Steuerlogik 18 dargestellt. Eine erste Vergleichsschaltung 33 erhält an ihrem ersten Eingang den Messwert des Ausgangsstromes I_{L} von der Strommesseinrichtung 17, an ihrem zweiten Eingang den Schwellwert I_{N} von einer Kontrollschaltung 34 zur Verfügung gestellt. Ist der Ausgangsstrom I_{L} kleiner als der Schwellwert I_{N}, so erhält ein ODER-Glied 35 an einem seiner Eingänge eine logische 1, was zur Folge hat, dass der Ausgang des ODER-Gliedes 35 als zweite Stellgröße 20 der Wandler-Stelleinrichtung 16 signalisiert, dass der Gleichspannungswandler 11 bei Bedarf den maximalen Ausgangsstrom Iₘₐₓ bereitstellen darf.

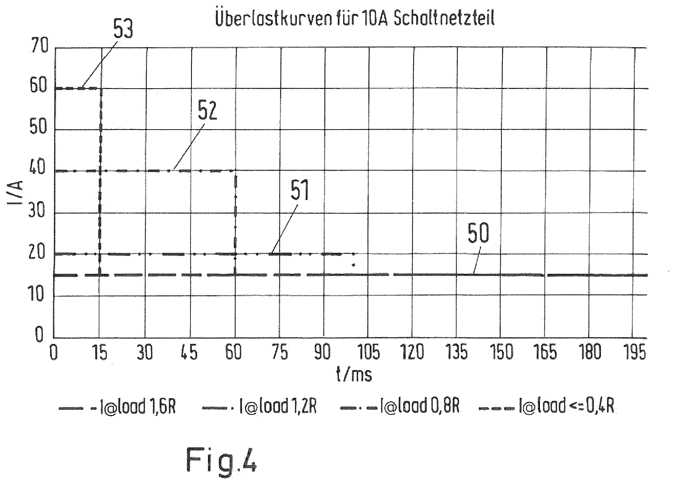

Wird hingegen der Ausgangsstrom I_{L} gleich oder größer als der Schwellwert I_{N}, so wird ein erster Timer 36 gestartet. Der erste Timer 36 erhält von der Kontrollschaltung 34 einen Referenzwert für eine Ausgangsstrompulsdauer t_{Pulse} übermittelt. Die Kontrollschaltung 34 hat die Ausgangsstrompulsdauer t_{Pulse} in Abhängigkeit von dem erhöhten Ausgangsstrom I_{L} ermittelt, im Verfahrensschema nach Figur 3 ist das der Ermittlungsschritt 42. Die in der Kontrollschaltung 34 hinterlegte Abhängigkeit der Ausgangsstrompulsdauer t_{Pulse} von dem erhöhten Ausgangsstrom ist beispielhaft in der Figur 4 dargestellt. Solange wie die Ausgangsstrompulsdauer t_{Pulse} nicht erreicht ist, gibt der erste Timer 36 eine logische 1 an den Eingang des ODER-Gliedes 35, und der Ausgang des ODER-Gliedes 35 signalisiert als zweite Stellgröße 20 der Wandler-Stelleinrichtung 16, dass der Gleichspannungswandler 11 bei Bedarf den maximalen Ausgangsstrom Iₘₐₓ bereitstellen darf. Der Ausgangsstrom I_{L} wird in der Höhe des erhöhten Stromwertes für die Dauer der ermittelten Ausgangsstrompulsdauer bereitgestellt.

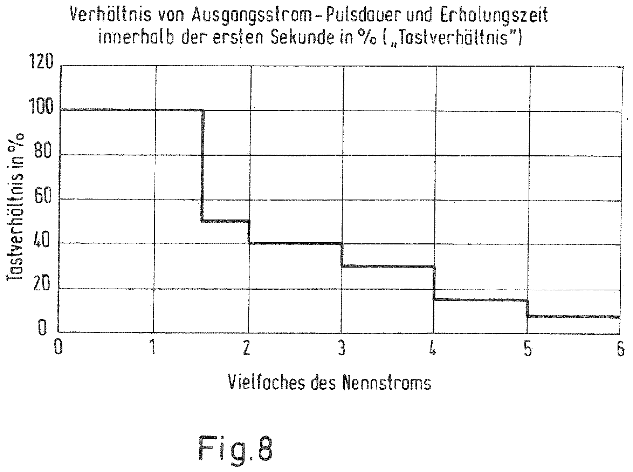

In dem zweiten Vergleichsschritt 43 wird ermittelt, wann die Ausgangsstrompulsdauer t_{Pulse} erreicht ist. Wenn diese eingetreten ist, geschieht zweierlei. Der Ausgang des NOR-Gliedes 37 signalisiert als erste Stellgröße 19 der Wandler-Stelleinrichtung 16, dass der Gleichspannungswandler 11 bei Bedarf nur noch einen maximalen Ausgangsstrom bis zur Höhe des Schwellenwertes I_{N} bereitstellen darf. Dies ist der Bereitstellungsschritt 44 im Verfahrensablauf nach Figur 3.Und es wird ein zweiter Timer 38 gestartet. Der zweite Timer 38 erhält von der Kontrollschaltung 34 einen Referenzwert für eine Erholungszeit t_{recover} übermittelt. Die Erholungszeit t_{recover} wird in der Kontrollschaltung 34 in Abängigkeit von dem erhöhten Ausgangsstrom IL ermittelt. Je höher der Ausgangsstrom, desto größer auch die Erholungszeit t_{recover} , und desto kürzer war ja auch die Ausgangsstrompulsdauer t_{Pulse}. In der Figur 8 ist dieser Zusammenhang als Darstellung des Verhältnisses von Ausgangsstrom-Pulsdauer t_{Pulse} und Erholungszeit t_{recover} innerhalb der ersten Sekunde dargestellt.

In einem dritten Vergleichsschritt 45 wird ermittelt, wann die Erholungszeit t_{recover} abgelaufen ist. Ist dies eingetreten, so erhält das ODER-Glied 35 an einem seiner Eingänge wieder eine logische 1, was zur Folge hat, dass der Ausgang des ODER-Gliedes 35 wieder als zweite Stellgröße 20 der Wandler-Stelleinrichtung 16 signalisiert, dass der Gleichspannungswandler 11 bei Bedarf den maximalen Ausgangsstrom Iₘₐₓ bereitstellen darf. Es können nun weitere Zyklen folgen, das Verfahren kann wieder bei dem ersten Schritt 40 beginnen.

Alle beschriebenen Funktionsblöcke der Steuerlogik 18 können entweder in Hardware als elektronische Schaltungen oder in Software als Programmmodule eines Anwendungsprogramms für einen Mikroprozessor ausgeführt sein.

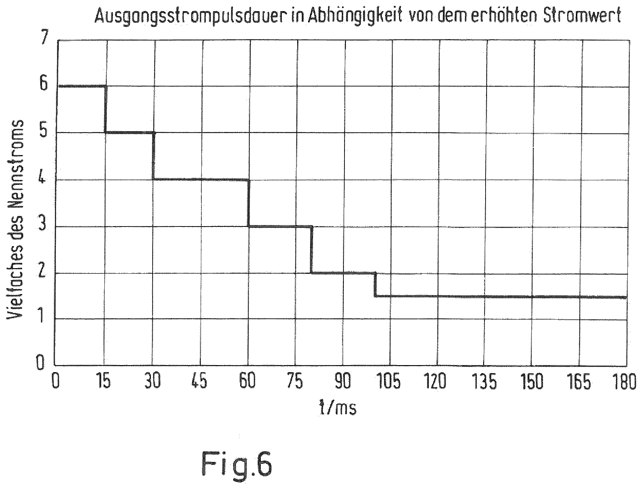

Es sollen jetzt die Figuren 4, 6 und 8 zusammen betrachtet werden. Die Figur 4 zeigt als schematische Darstellung verschiedene Überlastkurven bei einem erfindungsgemäßen 10A-Schaltnetzteil. Die Figur 6 zeigt die Ausgangsstrompulsdauer t_{Pulse} in ms in Abhängigkeit des erhöhten Ausgangsstromes I_{L} als Vielfaches des Nennstromes. Die Figur 8 zeigt das Verhältnis von Ausgangsstrom-Pulsdauer und Erholungszeit innerhalb der ersten Sekunde. Das erfindungsgemäße Verfahren versucht, innerhalb der ersten Sekunde möglichst viele Strompulse durchzuführen, um zum Beispiel Anlaufvorgänge von Elektromotoren optimal zu unterstützen.

Kurve 50 in Figur 4 zeigt den Fall eines Wertes der Last 4 von 1,6 Ohm. Bei 24V Ausgangsspannung kann der resultierende Strom von 15A dauerhaft fließen. Das entspricht dem 1,5-fachen des Nennstromes; in Figur 6 sieht man, dass hier die Ausgangsstrompulsdauer unbegrenzt ist, in Figur 8 sieht man, dass hier das Tastverhältnis 100% ist, also keine Erholungszeit erforderlich ist.

Kurve 51 in Figur 4 zeigt den Fall eines Wertes der Last 4 von 1,2 Ohm. Bei 24V Ausgangsspannung ergibt sich ein resultierender Strom von 20A, das entspricht dem 2-fachen des Nennstroms. In Figur 6 sieht man, dass jetzt die Ausgangsstrompulsdauer 100ms beträgt, aus Figur 8 ergibt sich dazu ein Tastverhältnis von 50%, also eine Erholungszeit von 100ms.

Kurve 52 in Figur 4 zeigt den Fall eines Wertes der Last 4 von 0,8 Ohm. Bei 24V Ausgangsspannung ergibt sich ein resultierender Strom von 40A, das entspricht dem 4-fachen des Nennstroms. In Figur 6 sieht man, dass jetzt die Ausgangsstrompulsdauer 60ms beträgt, aus Figur 8 ergibt sich dazu ein Tastverhältnis von 30%, also eine Erholungszeit von 140ms.

Kurve 53 in Figur 4 zeigt den Fall eines Wertes der Last 4 von 0,4 Ohm, was einem beginnenden Kurzschluss in dem angeschlossenen lastkreis entsprechen kann. Bei 24V Ausgangsspannung ergibt sich ein resultierender Strom von 60A, das entspricht dem 6-fachen des Nennstroms. In Figur 6 sieht man, dass jetzt die Ausgangsstrompulsdauer 15ms beträgt, aus Figur 8 ergibt sich dazu ein Tastverhältnis von 7,5%, also eine Erholungszeit von 185ms.

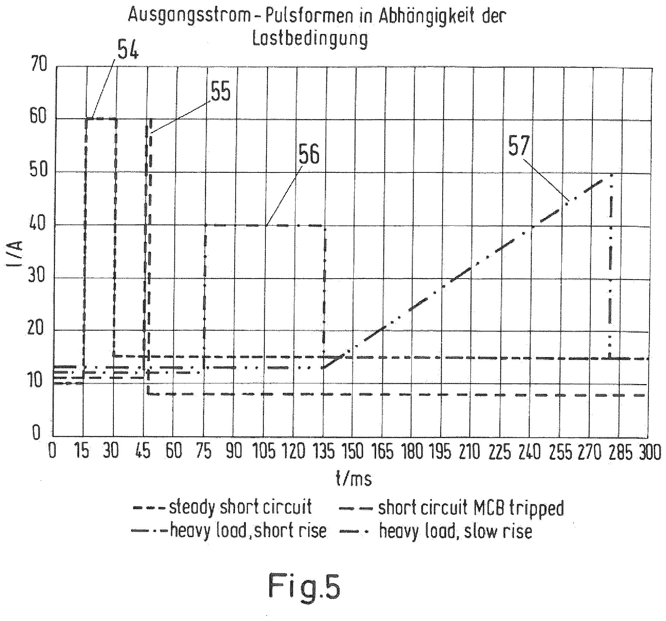

Die Figur 5 zeigt mögliche Ausgangsstrom-Pulsformen bei Anwendung des erfindungsgemäßen Verfahrens in Abhängigkeit von den Lastbedingungen. Kurve 54 zeigt den Fall, dass ein Kurzschluss im äußeren Lastkreis anliegt, der aber nicht abgeschaltet werden konnte, etwa weil die Schutzeinrichtung nicht angesprochen hat, aus welchen Gründen auch immer. Nach der beim 6-fachen Nennstrom ermittelten Ausgangsstrompulsdauer von 15ms, siehe oben, wird der Ausgangsstrom auf den 1,5 - fachen Nennstrom begrenzt, für weitere 185ms, es kann dann ein weiterer Ausgangsstrompuls vom 6-fachen Nennstrom folgen. In der Figur 5 sind die weiteren Pulse allerdings nicht dargestellt.

Kurve 55 in Figur 5 zeigt den Fall, dass ein Kurzschluss in einem nachfolgenden Stromkreis innerhalb von 3ms durch die Schutzeinrichtung 5 abgeschaltet wurde. Da noch weitere Stromkreise angeschlossen sind, die einen geringen Ausgangsstrom ziehen, geht der Ausgangsstrom nach Abschalten des Kurzschlusses hier im Beispiel auf eine niedrigen Wert von etwa 9A zurück.

Kurve 56 in Figur 5 zeigt den Fall einer schweren Last, die sehr schnell zugeschaltet wird, entsprechende der Kurve 52 in Figur 4. Der Ausgangsstrom wird hier lastabhängig auf 60A erhöht, wie oben beschrieben. Nach Ablauf der lastabhängig erlaubten Pulsdauer von 60ms wird hier auf den 1,5-fachen Nennstrom, also 15A, zurückgefahren. Auch hier können nach Ablauf der Erholungszeit von 140ms weitere Pulse von 40A und 60ms Dauer folgen, gegebenenfalls so lange, bis die Schwerlastbedingung nicht mehr vorliegt.

Die Kurve 57 in Figur 5 zeigt den Fall einer schweren Last, die langsam zugeschaltet wird. Der Ausgangsstrom wird bei Anwendung des erfindungsgemäßen Verfahrens hier langsam rampenförmig erhöht, bis er den der maximal zugeschalteten Last entsprechenden Höchstwert, hier im Beispiel 50A, erreicht hat, bevor die Begrenzung des Ausgangsstromes auf den Schwellwert von 15A, entsprechend dem 1,5-fachen Nennwert, einsetzt.

Das erfindungsgemäße Verfahren sieht also vor, dass nach Erkennen eines erhöhten Ausgangsstromes die maximale Dauer des Ausgangsstromimpulses ermittelt wird in Abhängigkeit von dem tatsächlich fließenden Strom. Die Ermittlung kann entweder in Hardware oder in Firmware erfolgen.

Nach Ablauf dieser Impulsdauer wird der Ausgangsstrom auf den dauerhaft unterstützten Ausgangsstrom begrenzt zur Erholung der Komponenten.

Danach können weitere Zyklen folgen.

Die Zyklen sind dabei lastabhängig möglichst kurz gehalten zur Gewährleistung optimaler Anlaufphasen, z.B. bei einem anlaufenden Motor als Last, bei gleichzeitiger Schonung interner Komponenten.

Durch die kurzen Strompulse mit Pausenphasen können auch Schutzelemente zwischenzeitlich abkühlen, um eine versehentliche thermische Auslösung zu vermeiden.

Der Ausgangskondensator 31 des Netzteils 1 kann die initiale Stromspitze unterstützen und damit interne Komponenten schonen.

Vorteilhaft ist, dass der erhöhte Ausgangsstrom zeitlich vor dem Erkennen einer Sondersituation, zum Beispiel eines Kurzschlusses, von dem Netzteil 1 zur Verfügung gestellt wird, nicht erst als Reaktion auf eine erkannte Sondersituation.

Die Dauer der Stromimpulse ist nicht festgelegt, sondern ist direkt abhängig von der übertragenen Leistung und damit lastabhängig angepasst.

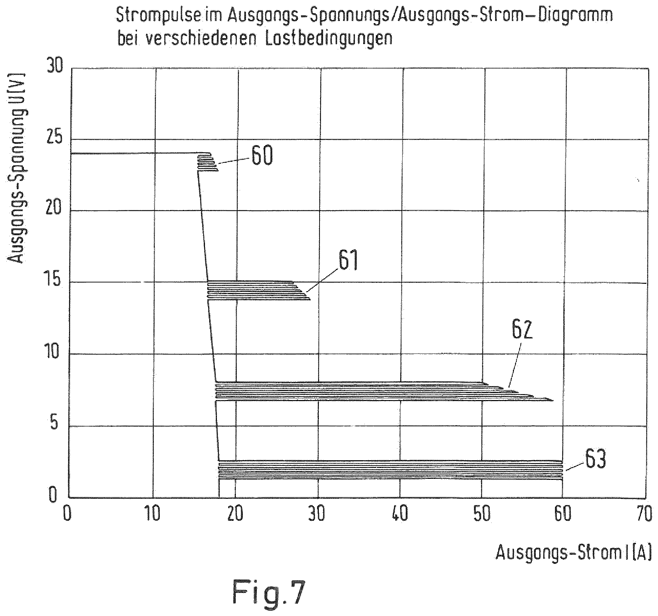

Zur Lieferung des erhöhten Stromes ist keine Unterscheidung einer Spannungsschwelle vonnöten, wodurch die Ausgangsspannung je nach Anwendungsfall im Nennbereich verbleiben kann. So zeigen die Figuren 4 und 5 das Verhalten bei einer Last mit weitgehend ohmschem Charakter, dabei bleibt die Ausgangsspannung zunächst auf ihrem Nennwert von 24V. Figur 7 zeigt die Strompulse in einem Ausgangsspannungs/Ausgangsstrom-Diagramm bei verschiedenen Lastbedingungen mit Lasten, die auch einen hohen kapazitiven Anteil haben. Im Fall einer großen kapazitiven Last bricht die Ausgangsspannung ein. Auch bei diesen Lastbedingungen erzeugt das erfindungsgemäße Verfahren eine Folge von Ausgangsstrompulsen mit erhöhtem Ausgangstromwert, wobei die Höhe der Ausgangsstrompulse lastabhängig ist und mit steigender Last ansteigt. So sieht man in der Figur 7 im Bereich 60 das Ausgangsstrom-Pulsverhalten bei einer niedrigeren Überlast, im Bereich 61 bei einer erhöhten Überlast, im Bereich 62 bei einer weiter erhöhten Überlast und im Bereich 63 bei einer sehr hohen Last, beispielsweise einem Kurzschluss. Mit steigender Last bricht hier die Ausgangsspannung immer weiter ein. Doch auch hier wird der erste Ausgangsstromimpuls bereits vor dem weiteren Abfall der Ausgangsspannung ausgelöst.

Nach dem Unterschreiten einer Stromschwelle wird der aktuelle Impuls abgebrochen, damit es nicht zum Schwingen eines Systems parallel geschalteter Spannungsversorgungen kommt.

### Bezugszeichenliste

- 1: elektronische Stromversorgungseinrichtung
- 2: Ausgangsklemme
- 3: Ausgangsklemme
- 4: Niederspannungslast
- 5: Schutzeinrichtung
- 6: Eingangsklemme
- 7: Eingangsklemme
- 8: Gleichrichterschaltung
- 9: Leistungsfaktorkorrekturfilter PFC
- 10: HV-DC-Bus
- 11: Gleichspannungswandler, DC/DC-Wandler
- 12: Eingangsklemme des DC/DC-Wandlers
- 13: Eingangsklemme des DC/DC-Wandlers
- 14: Ausgangsklemme des DC/DC-Wandlers
- 15: Ausgangsklemme des DC/DC-Wandlers
- 16: Wandler-Stelleinrichtung
- 17: Strommesseinrichtung
- 18: Steuerlogik
- 19: erste Stellgröße
- 20: zweite Stellgröße
- 21: Rechteckwellengenerator
- 22: Schalter Q1
- 23: Schalter Q2
- 24: Resonanznetzwerk
- 25: Gleichrichternetzwerk
- 26: Steuerschaltung
- 27: Kapazität C
- 28: Streuinduktivität
- 29: Magnetisierungsinduktivität
- 30: HF-Transformator
- 31: Glättungskondensator
- 32: Vollbrückengleichrichter
- 33: erste Vergleichsschaltung
- 34: Kontrollschaltung
- 35: ODER-Glied
- 36: erster Timer
- 37: NOR-Glied
- 38: zweiter Timer
- 40: erster Schritt
- 41: erster Vergleichsschritt
- 42: Ermittlungsschritt
- 43: zweiter Verfahrensschritt
- 44: Bereitstellungsschritt
- 45: dritter Vergleichsschritt
- 50: Lastkurve mit 24V und 1,6 Ohm
- 51: Lastkurve mit 24V und 1,2 Ohm
- 52: Lastkurve mit 24V und 0,8 Ohm
- 53: Lastkurve mit 24V und 0,4 Ohm
- 54: Strompuls bei Kurzschluss, nicht beseitigt
- 55: Strompuls bei Kurzschluss, beseitigt
- 56: Strompuls bei hoher Last, schnell zugeschaltet
- 57: Strompuls bei hoher Last, langsam ansteigend
- 60: Ausgangsstrom-Pulsverhalten bei einer niedrigeren Überlast
- 61: Ausgangsstrom-Pulsverhalten bei einer höheren Überlast
- 62: Ausgangsstrom-Pulsverhalten bei einer noch höheren Überlast
- 63: Ausgangsstrom-Pulsverhalten bei einer sehr hohen Überlast

## Patentansprüche

1. Verfahren zur Energieversorgung einer Niederspannungslast (4) mit Hilfe einer elektronischen Stromversorgungsvorrichtung (1),
**dadurch gekennzeichnet, dass** das Verfahren die folgenden Schritte umfasst:
a) die Stromversorgungsvorrichtung wird darauf eingestellt, um bei Bedarf einen Ausgangsstrom bis zu einem vorbestimmten Stromspitzenwert an die Niederspannungslast (4) bereitstellen zu können,
b) der von der elektronischen Stromversorgungsvorrichtung (1) an die Niederspannungslast (4) bereitgestellte Ausgangsstrom (I_{L}) wird überwacht, um ein Ansteigen des Ausgangsstromes (I_{L}) über einen Schwellwert (I_{N}), der niedriger ist als der Stromspitzenwert, zu erkennen,
c) wenn ein Anstieg des Ausgangsstromes (I_{L}) auf einen erhöhten Ausgangsstromwert, der höher ist als der Schwellwert (I_{N}), erkannt wird, wird der erhöhte Ausgangsstromwert erfasst und eine Ausgangsstrompulsdauer (t_{Pulse}) in Abhängigkeit von dem erhöhten Stromwert ermittelt,
d) der Ausgangsstrom (I_{L}) wird in der Höhe des erhöhten Stromwertes für die Dauer der ermittelten Ausgangsstrompulsdauer (t_{Pulse}) bereitgestellt,
e) nach Ablauf der Ausgangsstrompulsdauer (t_{Pulse}) wird der Ausgangsstrom (I_{L}) in Höhe des Schwellwertes (I_{N}) bereitgestellt,
wobei das Bereitstellen des Ausgangsstromes (I_{L}) in Höhe des Schwellwertes (I_{N}) nach Ablauf der Ausgangsstrompulsdauer (t_{Pulse}) für die Dauer einer vorbestimmten Erholungszeit (t_{recover}) erfolgt, und dass nach Ablauf der Erholungszeit (t_{recover}) die Stromversorgungsvorrichtung wieder darauf eingestellt wird, um bei Bedarf einen Ausgangsstrom (I_{L}) bis zu dem vorbestimmten Stromspitzenwert an die Niederspannungslast bereitstellen zu können,
wobei die Erholungszeit (t_{recover}) in Abhängigkeit von dem erhöhten Ausgangsstromwert ermittelt wird.

2. Verfahren nach Anspruch 1, **dadurch gekennzeichnet, dass** eine Schutzeinrichtung (5) zur Sicherung der Niederspannungslast (4) vorhanden ist und der Stromspitzenwert so hoch bestimmt wird, dass die Schutzeinrichtung (5) sicher ausgelöst wird.

3. Verfahren nach einem der vorigen Ansprüche, **dadurch**
**gekennzeichnet, dass** die Ausgangsstrompulsdauer (t_{Pulse}) umso länger ist, je niedriger der erhöhte Ausgangsstromwert ist.

4. Verfahren nach einem der vorigen Ansprüche, **dadurch gekennzeichnet, dass** wenn der Ausgangsstrom (I_{L}) vor Ablauf der Ausgangsstrompulsdauer (t_{Pulse}) den Schwellwert (I_{N}) erreicht oder unterschreitet, die Stromversorgungsvorrichtung darauf eingestellt wird, um einen Ausgangsstrom (I_{L}) bis zur Höhe des Schwellwertes (I_{N}) bereitstellen zu können.

5. Elektronische Stromversorgungsvorrichtung (1) zur Energieversorgung einer Niederspannungslast (4) durch Bereitstellen einer Ausgangsgleichspannung (Ua) und eines Ausgangsstromes (I_{L}) bis zur Höhe eines Stromspitzenwertes, **dadurch gekennzeichnet, dass** in der Stromversorgungseinrichtung (1) eine Einrichtung vorgesehen ist, die ausgebildet ist unter Ansprechen auf ein Ansteigen des Ausgangsstroms (I_{L}) über einen vorbestimmten Schwellwert (I_{N}) den erhöhten Ausgangsstrom zu erfassen, in Abhängigkeit des erhöhten Ausgangsstroms eine Ausgangsstrompulsdauer (t_{Pulse}) zu ermitteln, den erhöhten Ausgangsstrom für die Dauer der Ausgangsstrompulsdauer (t_{Pulse}) bereitzustellen und nach Ablauf der ermittelten Ausgangsstrompulsdauer (t_{Pulse}) den Ausgangsstrom (I_{L}) in Höhe des Schwellwertes (I_{N}) bereitzustellen,
wobei das Bereitstellen des Ausgangsstromes (I_{L}) in Höhe des Schwellwertes (I_{N}) nach Ablauf der Ausgangsstrompulsdauer (t_{Pulse}) für die Dauer einer vorbestimmten Erholungszeit (t_{recover}) erfolgt, und die elektronische Stromversorgungsvorrichtung (1) so ausgebildet ist, dass nach Ablauf der Erholungszeit (t_{recover}) die Stromversorgungsvorrichtung wieder darauf eingestellt wird, um bei Bedarf einen Ausgangsstrom (I_{L}) bis zu dem vorbestimmten Stromspitzenwert an die Niederspannungslast bereitstellen zu können,
wobei die Erholungszeit (t_{recover}) in Abhängigkeit von dem erhöhten Ausgangsstromwert ermittelt wird.

6. Elektronische Stromversorgungsvorrichtung (1) nach Anspruch 5, **dadurch gekennzeichnet, dass** die Stromversorgungseinrichtung (1) ein elektronisches Schaltnetzteil ist und die Einrichtung einen Gleichspannungswandler (11) mit einstellbarem Energieübertragungsverhältnis und eine Strommesseinrichtung (17) zur Überwachung des Ausgangsstromes und eine Einstelleinrichtung (16) zur Einstellung des Energieübertragungsverhältnisses in Abhängigkeit von dem erfassten Ausgangsstrom (I_{L}) hat.

7. Elektronische Stromversorgungsvorrichtung (1) nach Anspruch 6, **dadurch gekennzeichnet, dass** der Gleichspannungswandler (11) ein Halbbrücken-LLC-Resonanzwandler ist.

8. Elektronische Stromversorgungsvorrichtung (1) nach Anspruch 7, **dadurch gekennzeichnet, dass** die Einstelleinrichtung (16) zur Einstellung des Energieübertragungsverhältnisses die Arbeitsfrequenz des Halbbrücken-LLC-Resonanzwandlers beeinflusst.

## Claims

1. A method for supplying power to a low-voltage load (4) by means of an electronic power supply device (1),
**characterized in that** the method comprises the following steps:
a) the power supply device is adjusted to be able to provide an output current up to a predetermined current peak value to the low-voltage load (4) when required,
b) the output current (I_{L}) provided by the electronic power supply device (1) to the low voltage load (4) is monitored to detect an increase of the output current (I_{L}) above a threshold value (I_{N}) lower than the peak current value,
c) when an increase in output current (I_{L}) to an increased output current value higher than the threshold value (I_{N}) is detected, the increased output current value is detected and an output current pulse duration (t_{Pulse}) is determined as a function of the increased current value,
d) the output current (I_{L}) is provided in the amount of the increased current value for the duration of the determined output current pulse duration (t_{Pulse}),
e) after the output current pulse duration (t_{Pulse}) has expired, the output current (I_{L}) is provided at the level of the threshold value (I_{N}),
wherein the providing of the output current (I_{L}) at the level of the threshold value (I_{N}) takes place after the expiry of the output current pulse duration (t_{Pulse}) for the duration of a predetermined recovery time (t_{recover}), and **in that** after the expiry of the recovery time (t_{recover}) the power supply device is again set to be able to provide an output current (I_{L}) up to the predetermined current peak value to the low-voltage load if required,
wherein the recovery time (t_{recover}) is determined dependent of the increased output current value.

2. The method according to claim 1, **characterized in that** a protective device (5) is provided for securing the low-voltage load (4) and the current peak value is determined to be so high that the protective device (5) is reliably triggered.

3. The method according to any of the preceding claims, **characterized in that** the lower the increased output current value is, the longer is the output current pulse duration (t_{Pulse}).

4. The method according to any one of the preceding claims, **characterized in that** if the output current (I_{L}) reaches the threshold value (I_{N}) or falls below it before the output current pulse duration (t_{Pulse}) has expired, the power supply device is adjusted thereto in order to be able to provide an output current (I_{L}) up to the level of the threshold value (I).

5. An electronic power supply device (1) for supplying power to a low-voltage load (4) by providing a DC output voltage (Ua) and an output current (I_{L}) up to the level of a current peak value,
**characterized in that** the power supply device (1) includes means that is configured to detect the increased output current in response to an increase in the output current (I_{L}) above a predetermined threshold value (I_{N}), to determine an output current pulse duration (t_{Pulse}) dependent on the increased output current, to provide the increased output current for the duration of the output current pulse duration (t_{Pulse}) and, after expiry of the determined output current pulse duration (t_{Pulse}), to provide the output current (I_{L}) at the level of the threshold value (I_{N}),
wherein the providing of the output current (I_{L}) at the level of the threshold value (I_{N}) takes place after expiry of the output current pulse duration (t_{Pulse}) for the duration of a predetermined recovery time (t_{recover}), and the electronic power supply device (1) is designed such that after expiry of the recovery time (t_{recover) the} power supply device is set again to be able to provide an output current (I_{L}) up to the predetermined current peak value to the low-voltage load if required,
wherein the recovery time (t_{recover}) is determined dependent on the increased output current value.

6. The electronic power supply device (1) according to claim 5, **characterized in that** the power supply device (1) is an electronic switching power supply and the device has a DC/DC converter (11) with adjustable power transfer ratio and current measuring means (17) for monitoring the output current and adjusting means (16) for adjusting the power transfer ratio depending on the detected output current (I_{L}).

7. Electronic power supply device (1) according to claim 6, **characterized in that** the DC/DC converter (11) is a half-bridge LLC resonant converter.

8. Electronic power supply device (1) according to claim 7, **characterized in that** the adjustment means (16) for adjusting the power transfer ratio influences the operating frequency of the half-bridge LLC resonant converter.

## Revendications

1. Procédé d'alimentation en énergie d'une charge à basse tension (4) à l'aide d'un dispositif électronique d'alimentation en courant (1),
**caractérisé en ce que** le procédé comprend les étapes suivantes :
a) le dispositif d'alimentation en courant est réglé pour pouvoir fournir un courant de sortie jusqu'à une valeur de courant crête prédéterminée à la charge à basse tension (4) en cas de besoin,
b) le courant de sortie (I_{L}) fourni par le dispositif électronique d'alimentation en courant (1) à la charge à basse tension (4) est surveillé afin de détecter une augmentation du courant de sortie (I_{L}) au-dessus d'une valeur de seuil (I_{N}) qui est inférieure à la valeur de courant crête,
c) lorsqu'une augmentation du courant de sortie (I_{L}) jusqu'à une valeur de courant de sortie augmentée, qui est supérieure à la valeur de seuil (I_{N}), est détectée, la valeur de courant de sortie augmentée est acquise et une durée d'impulsion de courant de sortie (t_{Pulse}) est déterminée en fonction de la valeur de courant augmentée,
d) le courant de sortie (I_{L}) est fourni à hauteur de la valeur de courant augmentée au cours de la durée d'impulsion de courant de sortie déterminée (t_{Pulse}),
e) après la fin de la durée d'impulsion de courant de sortie (t_{Pulse}), le courant de sortie (I_{L}) est fourni à hauteur de la valeur de seuil (I_{N}),
le courant de sortie (I_{L}) étant fourni à hauteur de la valeur de seuil (I_{N}) après que la durée d'impulsion de courant de sortie (tPulse) s'est écoulée pendant la durée d'un temps de récupération prédéterminé (t_{recover}), et, après que le temps de récupération (t_{recover}) s'est écoulé, le dispositif d'alimentation en courant est de nouveau réglé pour pouvoir fournir un courant de sortie (I_{L}) jusqu'à la valeur de courant crête prédéterminée à la charge à basse tension en cas de besoin,
le temps de récupération (t_{recover}) étant déterminé en fonction de la valeur de courant de sortie augmentée.

2. Procédé selon la revendication 1, **caractérisé en ce qu'**un module de protection (5) est présent pour sécuriser la charge à basse tension (4) et la valeur de courant crête est déterminée comme étant si élevée que le module de protection (5) est déclenché de manière fiable.

3. Procédé selon l'une des revendications précédentes, **caractérisé en ce que** la durée d'impulsion de courant de sortie (t_{Pulse}) est d'autant plus grande que la valeur de courant de sortie augmentée est faible.

4. Procédé selon l'une des revendications précédentes, **caractérisé en ce que**, lorsque le courant de sortie (I_{L}) atteint la valeur de seuil (I_{N}) ou descend au-dessous de celle-ci avant la fin de la durée d'impulsion de courant de sortie (t_{Pulse}), le dispositif d'alimentation en courant est réglé pour fournir un courant de sortie (I_{L}) jusqu'à hauteur de la valeur de seuil (I_{N}).

5. Dispositif électronique d'alimentation en courant (1) destiné à alimenter en énergie une charge à basse tension (4) en fournissant une tension continue de sortie (Ua) et un courant de sortie (I_{L}) jusqu'à hauteur d'une valeur de courant crête, **caractérisé en ce que** le dispositif d'alimentation en courant (1) comporte un module qui est conçu pour détecter le courant de sortie augmenté en réponse à une augmentation du courant de sortie (I_{L}) au-dessus d'une valeur de seuil prédéterminée (I_{N}), déterminer une durée d'impulsion de courant de sortie (t_{Pulse}) en fonction du courant de sortie augmenté, fournir le courant de sortie augmenté au cours de la durée d'impulsion de courant de sortie (t_{Pulse}) et fournir le courant de sortie (I_{L}) à hauteur de la valeur de seuil (I_{N}) après la durée d'impulsion de courant de sortie déterminée (t_{Pulse}),
le courant de sortie (I_{L}) étant fourni à hauteur de la valeur de seuil (I_{N}) après que la durée d'impulsion de courant de sortie (t_{Pulse}) s'est écoulée pendant la durée d'un temps de récupération prédéterminé (t_{recover}), et le dispositif électronique d'alimentation en courant (1) étant conçu de telle sorte que, après le temps de récupération (t_{recover}), le dispositif d'alimentation en courant est à nouveau réglé pour pouvoir fournir un courant de sortie (I_{L}) jusqu'à la valeur de courant crête prédéterminée à la charge à basse tension en cas de besoin,
le temps de récupération (t_{recover}) étant déterminé en fonction de la valeur de courant de sortie augmentée.

6. Dispositif électronique d'alimentation en courant (1) selon la revendication 5,
**caractérisé en ce que** le dispositif d'alimentation en courant (1) est une alimentation électronique à découpage et le dispositif comporte un convertisseur continu-continu (11) ayant un rapport de transmission d'énergie réglable et un module de mesure de courant (17) destiné à surveiller le courant de sortie et un module de réglage (16) destiné à régler le rapport de transmission d'énergie en fonction du courant de sortie détecté (I_{L}).

7. Dispositif électronique d'alimentation en courant (1) selon la revendication 6, **caractérisé en ce que** le convertisseur continu-continu (11) est un convertisseur résonnant LLC en demi-pont.

8. Dispositif électronique d'alimentation en courant (1) selon la revendication 7, **caractérisé en ce que** le module de réglage (16) destiné à régler le rapport de transmission d'énergie influe sur la fréquence de travail du convertisseur résonant LLC en demi-pont.
